# EUROPÄISCHE PATENTSCHRIFT

(11) **EP 4 269 281 B1**
(45) Veröffentlichungstag und Bekanntmachung des Hinweises auf die Patenterteilung: **23.10.2024**
(21) Anmeldenummer: 22170743.3
(22) Anmeldetag: 29.04.2022
(51) Int. Cl.: B65G 1/04, B65G 47/90

(54) **GREIFER ZUM BEWEGEN VON STÜCKGÜTERN SOWIE VERFAHREN ZUM BEWEGEN VON STÜCKGÜTERN MIT DEM GREIFER**
GRIPPER FOR MOVING PIECE GOODS AND METHOD FOR MOVING PIECE GOODS WITH THE GRIPPER
PRÉHENSEUR PERMETTANT DE DÉPLACER DES MARCHANDISES DE DÉTAIL, AINSI QUE PROCÉDÉ PERMETTANT DE DÉPLACER DES MARCHANDISES DE DÉTAIL AU MOYEN DU PRÉHENSEUR

(43) Veröffentlichungstag der Anmeldung: 01.11.2023
(73) Patentinhaber: Becton Dickinson Rowa Germany GmbH, 53539 Kelberg (DE)
(72) Erfinder: HELLENBRAND, Christoph, 56761 Kaifenheim (DE); GROSS, Dietmar, 53539 Kelberg (DE)
(74) Vertreter: Zenz Patentanwälte Partnerschaft mbB

(56) Entgegenhaltungen:
- EP-A1- 3 099 604
- WO-A1-2014/090275
- DE-U1- 202020 106 693
- JP-A- S57 189 910
- US-A- 4 010 855

## Beschreibung

Die vorliegende Erfindung betrifft einen Greifer zum Bewegen von Stückgütern sowie Verfahren zum Bewegen von Stückgütern mit dem Greifer. Insbesondere betrifft die Erfindung einen Greifer für eine Lagervorrichtung mit horizontalen Lagerflächen zum Ein- und Auslagern von Stückgütern sowie Verfahren zum Bewegen von Stückgütern auf einen und von einem Greifer.

Zum Bewegen von Stückgütern von einer Lagerfläche werden in Kommissionierautomaten, als Beispiel für eine Lagervorrichtung für Arzneimittelpackungen, regelmäßig Greifer verwendet, die die Stückgüter, also die Arzneimittelpackungen, von der Lagerfläche auf den Greifer bewegen, indem die Arzneimittelpackungen mittels verschwenkbarer Klemmbacken geklemmt und dann auf den Greifer gezogen werden. Die von den Klemmbacken aufzubringende Klemmkraft muss die Haftreibung Arzneimittelpackung/Lagerfläche übersteigen, andernfalls bleiben die Arzneimittelpackungen auf den Lagerflächen liegen. Das Überwinden der Haftreibung mittels Klemmen ist bei leichten Arzneimittelpackungen nicht problematisch. Bei schweren Arzneimittelpackungen oder anderen schweren Stückgütern ist das Bewegen mittels Klemmen aufgrund des Gewichts nicht oder nur mit aufwendigen Mechanismen möglich. Es kommt auch vor, dass das Klemmen als solches unerwünscht ist, da notwendigerweise eine gewisse Klemmkraft auf das Stückgut ausgeübt werden muss, was bei empfindlichen Stückgütern nachteilig oder gar ausgeschlossen ist. US 4 010 855 A offenbart einen Greifer gemäß dem Oberbegriff des Anspruchs 1.

Es ist Aufgabe der vorliegenden Erfindung, einen Greifer bereitzustellen, mit welchem auch schwere und/oder empfindliche Stückgüter bewegt werden können. Es ist ferner Aufgabe der vorliegenden Erfindung, Verfahren zum Bewegen von schweren und empfindlichen Stückgütern bereitzustellen.

Die Erfindung wird zum einen gelöst durch einen Greifer nach Anspruch 1. Der erfindungsgemäße Greifer zum Bewegen von Stückgütern umfasst einen sich in einer ersten horizontalen Richtung (X-Richtung) und einer zweiten horizontalen Richtung (Y-Richtung), orthogonal zur ersten horizontalen Richtung, erstreckenden Ablagetisch mit zumindest einer sich in Y-Richtung erstreckenden Ein- und Auslagerungsstirnseite, eine über dem Ablagetisch angeordnete Greifmittelführungsanordnung mit einem sich in X-Richtung erstreckenden und in X-Richtung verfahrbaren Greifmittel mit einem der Greifmittelführungsanordnung abgewandten und einem der Greifmittelführungsanordnung zugewandten Endabschnitt. Die Verfahrbarkeit des Greifmittels kann auf unterschiedliche Art und Weise bereitgestellt werden, beispielsweise indem die Greifmittelführungsanordnung als solche in X-Richtung bewegt wird, beispielsweise mittels eines sich in X-Richtung erstreckenden Linearantriebs, oder aber die Greifmittel oder Abschnitte davon bewegt werden, beispielsweise durch eine teleskopartige Ausgestaltung der Greifmittel. Greifer mit den vorgenannten Bauteilen und deren Funktionalität sind aus dem Stand der Technik bekannt.

Das Greifmittel des erfindungsgemäßen Greifers umfasst eine erste Umlenkeinrichtung, einen ersten sich in X-Richtung erstreckenden Führungsabschnitt und einen zweiten Führungsabschnitt sowie eine mit der Umlenkeinrichtung und den Führungsabschnitten zusammenwirkende erste einseitig flexible Kette mit einer Mehrzahl von Kettengliedern mit einer Kettengliedlänge KGL, wobei die einseitig flexible Kette eine Biegebegrenzungseinrichtung umfasst, die ein Verschwenken der Kettenglieder zueinander in einer ersten Gelenkrichtung begrenzt und in einer zweiten Gelenkrichtung erlaubt, und wobei die erste einseitig flexible Kette ein erstes, der Greifmittelführungsanordnung abgewandtes Ende und ein zweites, der Greifmittelführungsanordnung zugewandtes Ende aufweist.

Erfindungsgemäß ist es vorgesehen, dass die einseitig flexible Kette mittels eines Antriebs bewegbar und mittels der Umlenkeinrichtung in einem Winkel zwischen 70 - 110° zur X-Richtung in der zweiten Gelenkrichtung umlenkbar ist, dass die einseitig flexible Kette derart angeordnet ist, dass bei Bewegung des Greifmittels in X-Richtung Schubkräfte auf ein auf den Ablagetisch zu bewegendes Stückgut übertragbar sind, und dass die einseitig flexible Kette eine Ausrichteinrichtung aufweist, die die Kettenglieder im nicht-gelenkten Zustand in einer zueinander nicht-verschwenkten, gestreckten Ausrichtung hält und gegen ein Verschwenken in der zweiten Gelenkrichtung sichert.

Eine einseitige flexible Kette, auch als Schubkette oder rückensteife Kette bezeichnet, ist ein Spezialprodukt in der linearen Antriebstechnik. Eine Schubkette besteht aus speziell geformten, hoch präzisen mechanischen Kettengliedern. Die Kettenglieder sind dabei so gestaltet, dass ein Verschwenken der Kettenglieder in einer ersten Gelenkrichtung nur begrenzt möglich ist (die nicht-flexible "Seite" der Kette), in der zweiten Gelenkrichtung aber erlaubt ist (die flexible "Seite" bzw. Richtung). Regelmäßig sind diese Ketten so aufgebaut, dass die Kettenglieder in Bezug auf die nicht-flexible Seite nur so weit verschwenkt werden können, dass eine gestreckte, gerade Kette ausgebildet werden kann. Wie genau die Begrenzung der Verschwenkung erreicht wird ist von dem genauen Aufbau der Kette abhängig, hier wird die dazu genutzte Einrichtung als Biegebegrenzungseinrichtung bezeichnet. Auf eine genauere Beschreibung des allgemeinen Aufbaus und der allgemeinen Funktionsweise dieser Ketten wird verzichtet, da diese dem Fachmann bekannt sind. Es werden lediglich solche Details beschrieben, die für die vorliegende Erfindung wesentlich sind und sich ggf. von bekannten Ketten unterscheiden.

Bei dem erfindungsgemäßen Greifer ist die erste einseitig flexible Kette mittels eines Kettenantriebs und mittels der ersten Umlenkeinrichtung in einem Winkel zwischen 70 - 110° zur X-Richtung umlenkbar. Um zu vermeiden, dass die einseitig flexible Kette nach dem "Verlassen" der Umlenkeinrichtung eine "beliebige" Orientierung annimmt, sich zum Beispiel entsprechend der zweiten Gelenkrichtung aufrollt, ist es erfindungsgemäß vorgesehen, dass diese die oben genannte Ausrichteinrichtung umfasst - diese sorgt dafür, dass die Kette nach dem "Verlassen" der Umlenkeinrichtung linear ausgerichtet bleibt.

Mit dem erfindungsgemäßen Greifer ist es möglich, Stückgüter auf den Ablagetisch zu schieben (aus "Sicht" der Kette, aus der Gesamtsicht des Greifers eher ein Ziehen). Da ein schiebender Kettenabschnitt aber beim Ausüben einer Druckkraft auf die der Ein- und Auslagerungsstirnseite abgewandte Seite (also den Rücken) flexibel ist (der Kettenabschnitt kann also weiter entsprechend der zweiten Gelenkrichtung verschwenkt werden), kann mit einem entsprechenden Greifer kein Stückgut auf eine Lagerfläche geschoben werden.

Erfindungsgemäß ist bei dem Greifer eine Ausrichteinrichtung vorgesehen, welche die einseitig flexible Kette im nicht-gelenkten Zustand, also wenn sie über den Ablagetisch bewegt bzw. ausgefahren ist, in einer getreckten, nicht-verschwenkten Ausrichtung hält. Bei einer Ausführungsform ist es vorgehen, dass die Ausrichteinrichtung der einseitig flexiblen Kette als ein sich durch die Kette erstreckendes Federelement ausgebildet ist, welches die Kettenglieder in die erste Gelenkrichtung gegen die Biegebegrenzungseinrichtung drückt. Eine entsprechende Gestaltung der Ausrichteinrichtung ist technisch einfach und erfordert nur geringfügige Modifikation an "üblichen" einseitig flexiblen Ketten.

Bei einer alternativen Ausführungsform ist die Ausrichteeinrichtung durch eine Mehrzahl von Rastarmen mit Rastnasen und Rastaufnahmen gebildet, wobei ein Rastarm eines Kettengliedes mit einer Rastaufnahme eines benachbarten Kettengliedes wechselwirken kann und wechselwirkende Rastarme und Rastaufnahmen die entsprechenden Kettenglieder gestreckt ausrichten. Um die Ausrichtung der Kettenglieder zu gewährleisten, muss die Verrastung der Kettenglieder vor dem Bewegen des Kettenabschnitts über den Ablagetisch erfolgen. Dazu ist es vorgesehen, dass bei dieser Ausführungsform der zweite Führungsabschnitt derart ausgebildet ist, dass dieser eine Verrastung benachbarten Kettenglieder bewirkt. In Abhängigkeit von der genauen Ausgestaltung der Rastmittel (Rastarme, Rastnasen, Rastaufnahmen) kann dies zum Beispiel erreicht werden, indem der zweite Führungsabschnitt länger als eine Kettengliedlänge ist.

Mit dem erfindungsgemäßen Greifer ist es aus oben genannten Gründen nicht möglich, schwere Stückgüter von dem Ablagetisch auf einen Lagerplatz zu schieben (die einseitig flexible Kette ist in der Schubrichtung von der Ablagefläche über die Ein- und Auslagerungsstirnseite flexibel, die Kettenglieder können in der zweiten Gelenkrichtung verschwenken). Ein Schieben eines Stückguts von dem Ablagetisch auf einen Lagerplatz muss mit einer zusätzlichen Einrichtung des Greifers ermöglicht werden.

Bei einer bevorzugten Ausführungsform des Greifers, bei welcher Stückgüter auch mit Hilfe der ersten flexiblen Kette von dem Ablagetisch geschoben werden können, ist es vorgesehen, dass der Greifer ein zweites Greifmittel aufweist, wobei das zweite Greifmittel eine Aufnahmeeinrichtung aufweist, die mit dem ersten Ende der ersten einseitig flexiblen Kette derart lösbar verbindbar ist, dass bei Bewegung der Greifmittel in X-Richtung zur Ein- und Auslagerungsstirnseite eine Schubkraft (aus der "Sicht" der Kette) auf das Stückgut übertragen wird.

Indem eine lösbare Verbindung mit der Aufnahmeeinrichtung bereitgestellt wird, wird eine in beide Richtungen (in Bezug auf die Ein- und Auslagerungsstirnseite) starre und druckbelastbare Verbindung geschaffen, mit welcher auch größere Kräfte übertragen werden können, sprich auch schwere Stückgüter von einer Lagerfläche auf den Greifer und von dem Greifer auf eine Lagerfläche bewegt werden können.

Ein weiterer wesentlicher Vorteil der Erfindung ist, dass der Aufbau der Greifmittel relativ einfach ist und die Kette als solche "platzsparend" entlang der X-Richtung des Greifmittels gelagert werden kann. Das Greifmittel selbst kann weiterhin schmal gebaut sein, was für eine enge und damit platzsparende Lagerung von Stückgütern auf einer Lagerfläche mit definierten Ausmaßen wesentlich ist. Ferner sind die Bauteile sehr robust, häufige Wartung und rascher Verschleiß sind nicht zu erwarten.

Um die volle Länge der Greifmittel nutzen zu können, ist es bei einer bevorzugten Ausführungsform vorgesehen, dass die erste Umlenkeinrichtung und die Aufnahmeeinrichtung bei den der Greifmittelführungsanordnung abgewandten Endabschnitten der Greifmittel angeordnet sind.

Durch Bewegung der Greifmittel in X-Richtung hin zu dem Ablagetisch des Greifers wird ein (oder mehrere Stückgüter) auf den Ablagetisch bewegt. Bei maximalem "Bewegen" der Greifmittel (in X-Richtung) wird durch die Positionierung der Umlenkeinrichtung und der Aufnahmeeinrichtung an dem Greifmittel der Ablageort des Stückguts oder der Stückgüter auf dem Ablagetisch definiert. Wenn also die Umlenkeinrichtung und die Aufnahmeeinrichtung in den der Greifmittelführungsanordnung abgewandten Endabschnitte angeordnet sind, wird ein Stückgut nahe der Ein- und Auslagerungsstirnseite positioniert. Dies kann aber für das weitere Handling des Stückguts eine nicht optimale oder gar unbrauchbare Position sein. Ferner gestattet es diese Anordnung nicht ohne weiteres (also nicht ohne das Vorsehen weiterer Bauteile), dass mit der einseitig flexiblen Kette Stückgüter von dem Ablagetisch auf eine Lagerfläche bewegt werden.

Um u.a. zu ermöglichen, ein Stückgut bei verschiedenen Positionen auf dem Ablagetisch anzuordnen, ist es bei einer bevorzugten Ausführungsform vorgesehen, dass die erste Umlenkeinrichtung und/oder die Aufnahmeeinrichtung jeweils mittels eines Antriebs in X-Richtung auf bzw. an dem jeweiligen Greifmittel bewegt werden können. Eine solche Bewegbarkeit ermöglicht ferner, dass mit Hilfe der ersten flexiblen Kette Stückgüter auch von dem Greifer auf z. B. eine Lagerfläche bewegt werden, was bei der später folgenden Beschreibung der Verfahren deutlich wird.

Die Aufnahmeeinrichtung kann auf verschiedene Art und Weise ausgebildet bzw. realisiert werden, solange deren Funktion gewährleistet ist, nämlich mit dem ersten Ende der ersten einseitig flexiblen Kette eine lösbare Verbindung einzugehen, so dass bei Bewegung der Greifmittel in X-Richtung zur Ein- und Auslagerungsstirnseite Schubkraft auf ein Stückgut übertragen wird. Bei einer baulich einfachen Ausführungsform ist vorgesehen, dass die Aufnahmeeinrichtung eine Öffnung zum Aufnehmen des ersten Endes der ersten Kette umfasst, wobei die Öffnung vorzugsweise eine Tiefe aufweist, die größer als eine Kettengliedlänge ist.

Bei einer alternativen Ausführungsart ist die Aufnahmeeinrichtung bereitgestellt durch ein erstes Ende einer zweiten mit einer zweiten Umlenkeinrichtung zusammenwirkenden einseitig flexiblen Kette, welche mittels eines zweiten Kettenantriebs bewegbar und mittels der zweiten Umlenkeinrichtung in einem Winkel zwischen 70 - 110° zur X-Richtung umlenkbar ist, wodurch das erste Ende der zweiten Kette in den Raum zwischen den Greifmitteln bewegbar ist und wobei die ersten Enden der Ketten derart lösbar miteinander verbindbar sind, dass bei Bewegung der Greifmittel in X-Richtung zur Ein- und Auslagerungsstirnseite Schubkraft übertragen wird.

Bei dieser Ausführungsform weisen die beiden Greifmittel die gleichen Bauteile auf, die spiegelsymmetrisch zueinander (angeordnet) sind. Die Aufnahmeeinrichtung wird in diesem Fall durch all die vorgenannten Bauteile bereitgestellt.

Eine solche Ausführungsform ist insbesondere dann sinnvoll, wenn die möglichen Abstände zwischen den Greifmitteln groß sein können - auf diese Weise kann man dennoch verhältnismäßig kurze Ketten verwenden, da diese jeweils nur die Hälfte des Raums überbrücken müssen. Die genaue Art und Weise der lösbaren Verbindung zwischen den Enden der Ketten hängt vom Einzelfall ab - im einfachsten Fall kann eine einfache biegefeste Stecker/Aufnahmestück-Verbindung verwendet werden.

Wie oben beschrieben kann vorgesehen sein, dass die Umlenkeinrichtungen bzw. eine Umlenkeinrichtung und die Aufnahmeeinrichtung in X-Richtung entlang des Greifmittels bewegbar sind. Der Bewegungsfreiraum einer Umlenkeinrichtung wird aber durch die Kettenlänge als solche begrenzt, zumindest dann, wenn die Kette bei dem Bewegen der Umlenkeinrichtung hin zu dem der Greifmittelführungseinrichtung zugewandten Endabschnitt des Greifmittels nicht in der Greifmittelführungsanordnung aufgenommen wird. Um einen weiten Bewegungsspielraum bei der Bewegung der Umlenkreinrichtung(en) zu ermöglichen, ist es bei einer bevorzugten Ausführungsform vorgesehen, dass ein Greifmittel mit einer Umlenkeinrichtung bei dem der Greifmittelführungsanordnung abgewandten Endabschnitt bei dem der Greifmittelführungsanordnung zugewandten Endabschnitt eine weitere Umlenkeinrichtung aufweist, wobei mit der weiteren Umlenkeinrichtung eine einseitig flexible Kette aus der X-Richtung, vorzugsweise in einem Winkel < 90°, umlenkbar ist, wodurch das zweite Ende einer Kette über den Ablagetisch bewegbar ist.

Die Aufgabe wird ferner gelöst durch ein Verfahren gemäß Anspruch 10, zum Bewegen von Stückgütern auf einen erfindungsgemäßen Greifer, wobei der Greifer zu einer einem auszulagernden Stückgut zugeordneten Lagerfläche verfahren wird, zumindest ein Greifmittel in der X-Richtung zur Lagerfläche bewegt wird, so dass das Stückgut neben einem Greifmittel angeordnet ist, die erste einseitig flexible Kette mittels des zugeordneten Kettenantriebes derart bewegt wird, dass das erste Ende durch die erste, der Greifmittelführungsanordnung abgewandte Umlenkeinrichtung in einem Winkel zwischen 70 - 110° zur X-Richtung ausgefahren wird, wobei benachbarte Kettenglieder stromab der der Greifmittelführungsanordnung abgewandten Umlenkeinrichtung in eine zueinander nicht-verschwenkte, gestreckte Ausrichtung gebracht werden, so dass ein gestreckter Abschnitt der einseitig flexiblen Kette derart hinter das Stückgut bewegt wird, dass das Stückgut zwischen dem gestreckten Abschnitt der Kette und der Ablagefläche angeordnet ist. Schließlich wird das zumindest eine Greifmittel in X-Richtung zu dem Ablagetisch bewegt, wobei der gestreckte Abschnitt der ersten einseitig flexiblen Kette das Stückgut auf den Ablagetisch schiebt.

Wie bereits oben ausgeführt, kann man bei einem Greifer mit lediglich einem Greifmittel lediglich Stückgüter auf den Greifer schieben - aufgrund der Eigenschaften der einseitig flexiblen Kette kann man diese dann nicht nutzen, das Stückgut von dem Greifer auf eine Lagerfläche zu schieben.

Bei einem erfindungsgemäßen Verfahren gemäß Anspruch 11, das jedoch nur mit einem Greifer mit zwei Greifmitteln durchführbar ist, wird der Greifer zu einer einem auszulagernden Stückgut zugeordneten Lagerfläche verfahren, die Greifmittel werden in der X-Richtung zur Lagerfläche bewegt, so dass das Stückgut zwischen diesen angeordnet ist, und die erste einseitig flexible Kette wird mittels des zugeordneten Kettenantriebes derart bewegt, dass das erste Ende durch die erste, der Greifmittelführungsanordnung abgewandte Umlenkeinrichtung in einem Winkel zwischen 70 - 110° zur X-Richtung ausgefahren wird, wobei benachbarte Kettenglieder stromab der der Greifmittelführungsanordnung abgewandten Umlenkeinrichtung in eine zueinander nicht-verschwenkte, gestreckte Ausrichtung gebracht werden, so dass ein gestreckter Abschnitt der einseitig flexiblen Kette derart hinter das Stückgut bewegt wird, dass das Stückgut zwischen dem gestreckten Abschnitt der Kette und dem Ablagetisch angeordnet ist. Dann wird das erste Ende der ersten Kette derart lösbar mit der Aufnahmeeinrichtung des zweiten Greifmittels verbunden, dass bei Bewegung der Greifmittel in X-Richtung zur Ein- und Auslagerungsstirnseite Schubkräfte auf das Stückgut übertragbar sind. Schließlich werden die Greifmittel in X-Richtung zu dem Ablagetisch bewegt, so dass das Stückgut auf den Ablagetisch des Greifers geschoben wird.

Bei einer bevorzugten Ausführungsform wird das erste Ende der Kette lösbar mit der Aufnahmeeinrichtung verbunden, indem die zweite einseitig flexible Kette mittels des zugeordneten Kettenantriebes derart bewegt wird, dass das erste Ende der zweiten Kette durch die zweite, der Greifmittelführungsanordnung abgewandte Umlenkeinrichtung in den Raum zwischen den Greifmitteln bewegt wird, und die ersten Enden der Ketten derart lösbar miteinander verbunden werden, dass bei Bewegung der Greifmittel in X-Richtung zur Ein- und Auslagerungsstirnseite Schubkraft auf ein Stückgut übertragen wird.

Es wird zudem ein erfindungsgemäßes Verfahren gemäß Anspruch 13 vorschlagen . In Abhängigkeit von der genauen Ausgestaltung des Greifers kann ein Stückgut auch mit den flexiblen Ketten von dem Greifer auf eine Lagerfläche geschoben werden. Dazu werden die der Greifmittelführungsanordnung abgewandten Umlenkeinrichtungen oder eine entsprechende Umlenkeinrichtung und die Aufnahmeeinrichtung zu den der Greifmittelführungsanordnung zugewandten Endabschnitten der Greifmittel bewegt. Anschließend wird die erste einseitig flexible Kette mittels des zugeordneten Kettenantriebes derart bewegt, dass das erste freie Ende durch die erste, der Greifmittelführungsanordnung abgewandte Umlenkeinrichtung in den Raum zwischen den Greifmitteln bewegt wird, und zwar in Bezug auf die Ein- und Auslagerungsstirnseite hinter das zu bewegende Stückgut, und das erste freie Ende der ersten Kette derart lösbar mit der Aufnahmeeinrichtung des zweiten Greifmittels verbunden, dass bei Bewegung der Greifmittel in X-Richtung zur Ein- und Auslagerungsstirnseite eine Schubkraft auf das Stückgut übertragen werden kann, und dann die Greifmittel in X-Richtung über die Ein- und Auslagerungsstirnseite bewegt werden, so dass das Stückgut von dem Auflagetisch des Greifers bewegt wird.

Im Nachfolgenden werden bevorzugte Ausführungsformen des erfindungsgemäßen Greifers und Verfahrens unter Bezugnahme auf die Zeichnung beschrieben, in welcher
Figur 1 eine schematische Ansicht einer ersten Ausführungsform des Greifers zeigt,
Figuren 2a - 2d Detailansichten einer ersten Ausführungsform der einseitig flexiblen Kette des erfindungsgemäßen Greifers zeigen,
Figuren 3a - 3e Detailansichten einer zweiten Ausführungsform der einseitig flexiblen Kette des erfindungsgemäßen Greifers zeigen,
Figuren 4a und 4b Detailansichten eines Kettengliedes der Ausführungsform nach den Figuren 3a - 3e zeigen,
Figur 5 eine Detailansicht von Abschnitten der Greifmittel einer zweiten Ausführungsform des Greifers zeigt,
Figur 6 eine Detailansicht von Abschnitten der Greifmittel einer dritten Ausführungsform des Greifers zeigt,
Figuren 7a und 7b schematische Draufsichten einer vierten und fünften Ausführungsform des Greifers zeigen,
Figuren 8a - 8c verschiedene Stadien einer Ausführungsform eines Verfahrens zum Bewegen eines Stückguts auf einen erfindungsgemäßen Greifer zeigen, und
Figuren 9a - 9c verschiedene Stadien einer Ausführungsform eines Verfahrens zum Bewegen eines Stückguts von einem erfindungsgemäßen Greifer zeigen.

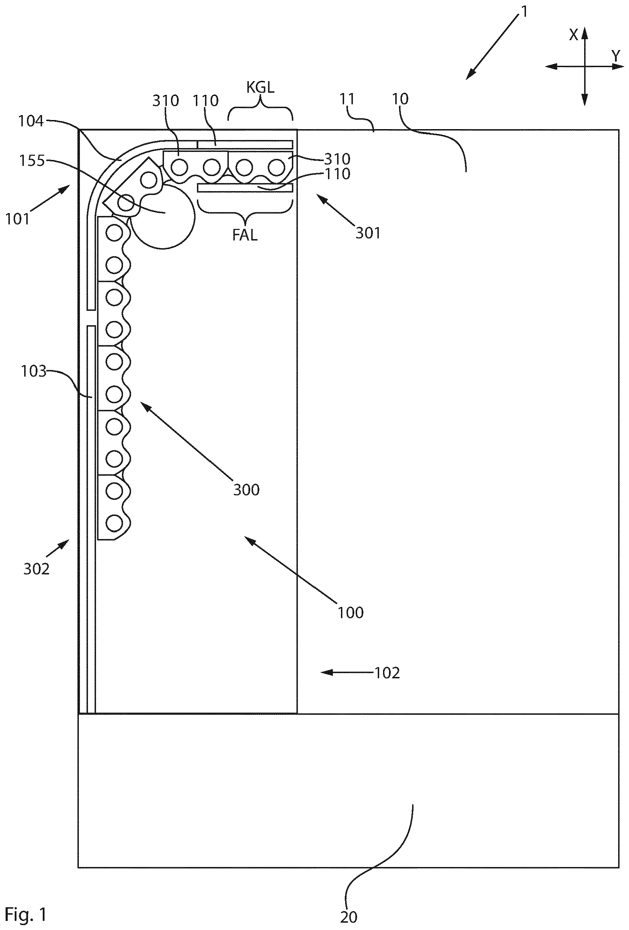

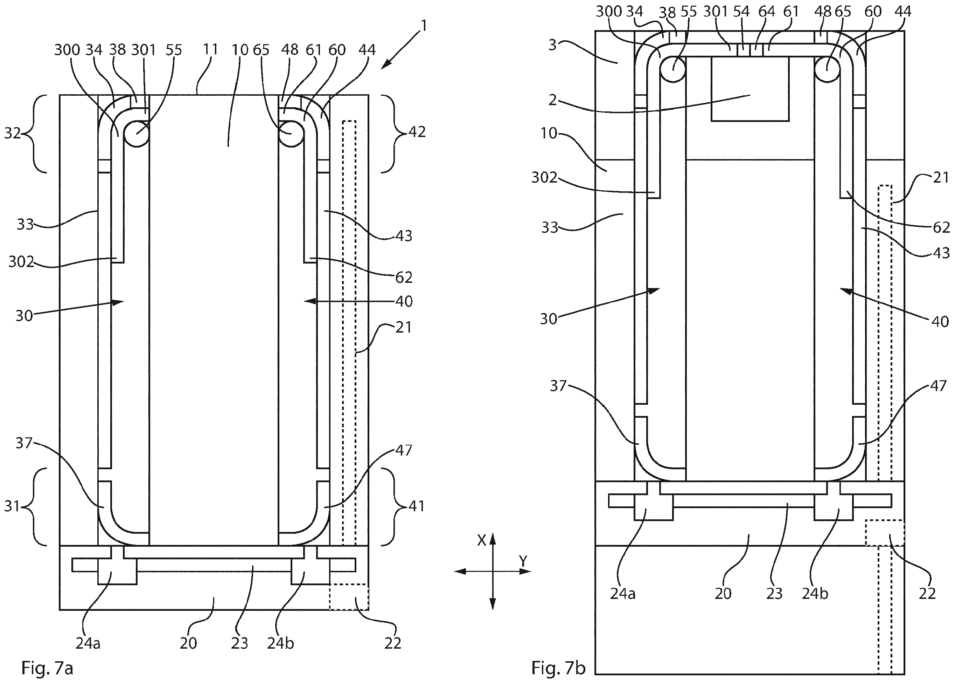

Figur 1 zeigt eine schematische Ansicht einer ersten Ausführungsform des erfindungsgemäßen Greifers 1. Dieser Greifer umfasst ein Greifmittel 100, welches an einer Greifmittelführungsanordnung 20 befestigt ist, die wiederrum über einem Ablagetisch 10 des Greifers angeordnet ist. Der Ablagetisch erstreckt sich in einer ersten horizontalen Richtung (X-Richtung) und einer zweiten horizontalen Richtung (Y-Richtung), orthogonal zur ersten horizontalen Richtung, und umfasst eine sich in Y-Richtung erstreckenden Ein- und Auslagerungsstirnseite 11. Das Greifmittel selbst ist in X-Richtung verfahrbar, wobei diese Verfahrbarkeit über die Greifmittelführungsanordnung bereitgestellt sein kann. Alternativ ist es auch denkbar, dass das Greifmittel teleskopierbar ausgebildet ist, d.h. lediglich ein Abschnitt des Greifmittels in X-Richtung verfahrbar ist. In diesem Zusammenhang wird auf die Beschreibung zu den Figuren 7a und 7b verwiesen, in denen eine Ausführungsform beschrieben ist, bei der die Bewegbarkeit der Greifmittel genauer beschrieben ist.

Das Greifmittel 100 umfasst eine Umlenkeinrichtung 104 und einen Kettenantrieb 155. Ferner umfasst das Greifmittel bei dieser Ausführungsform einen ersten, sich in X-Richtung erstreckenden Führungsabschnitt 103 sowie einen zweiten Führungsabschnitt 110 für ein erstes Ende 301 einer einseitig flexiblen Kette 300. Die einseitig flexible Kette wird über eine Bewegung des Kettenantriebs bewegt und mit der Umlenkeinrichtung aus der X-Richtung in die Y-Richtung umgelenkt, wobei bei der gezeigten Ausführungsform eine Umlenkung in einem Winkel von 90° stattfindet, also aus der X- in die Y-Richtung umgelenkt wird. Bei alternativen Ausführungsformen kann der Winkel zwischen 70 - 110° liegen, auch bei solchen Winkeln ist ein ordnungsgemäßes Bewegen von Stückgütern möglich. Wie dies später genauer beschrieben wird, werden die Stückgüter mit der einseitig flexiblen Kette (aus der Sicht der Kette) auf den Ablagetisch geschoben. Da die einseitig flexible Kette eine Biegebegrenzungseinrichtung umfasst, die ein Verschwenken der Kettenglieder zueinander in einer ersten Gelenkrichtung (GR1) begrenzt und in einer zweiten Gelenkrichtung (GR2) erlaubt, können entsprechende Schubkräfte übertragen werden - eine detailliertere Beschreibung der einseitig flexiblen Kette sowie der Biegebegrenzungseinrichtung erfolgt unter Bezugnahme auf nachfolgende Figuren.

Wie dies bereits weiter oben dargelegt wurde, umfasst die einseitig flexible Kette eine Ausrichteinrichtung, die die Kettenglieder im nicht-gelenkten Zustand in einer zueinander nicht-verschwenkten, gestreckten Ausrichtung hält und gegen ein Verschwenken in der zweiten Gelenkrichtung sichert. Zwei Beispiele für eine Ausrichteinrichtung werden nachfolgende detaillierter beschrieben. Bei einer Alternative ist es wesentlich, dass benachbarte Kettenglieder der einseitig flexiblen Kette nach dem Umlenken verrastet werden. Dazu ist gezeigten Ausführungsform die Länge (FAL) des zweiten Führungsabschnitte 110 größer als eine Kettengliedlänge (KGL) - in diesem Führungsabschnitt, der durch zwei parallele Führungsmittel gebildet ist, werden zwei benachbarte Kettenglieder aneinander ausgerichtet und verrastet - nach dem Umlenken sind die Kettenglieder also nicht mehr frei bewegbar, sondern werden definiert gerichtet bewegt - die Kette ist nach dem Verrasten quasi "starr", wobei diese Starrheit durch Aufbringen einer gewissen Kraft wieder auflösbar ist. Bei alternativen Ausführungsformen kann man diese "Starrheit" auch anders erreichen, wie nachfolgend dargelegt wird.

Mit dem erfindungsgemäßen Greifer können auch schwere Stückgüter von einer Lagerfläche auf den Greifer geschoben werden - ohne weitere Einrichtungen bzw. Bauteile kann das Stückgut aber nicht von dem Greifer bewegt werden, da selbst bei in X-Richtung bewegbarer Umlenkeinrichtung (nicht dargestellt) und Bewegung "hinter" ein Stückgut (ebenfalls nicht dargestellt) dieses nicht "von unten nach oben" geschoben werden kann, da die Kette in dieser Richtung nicht starr, sondern flexibel ist.

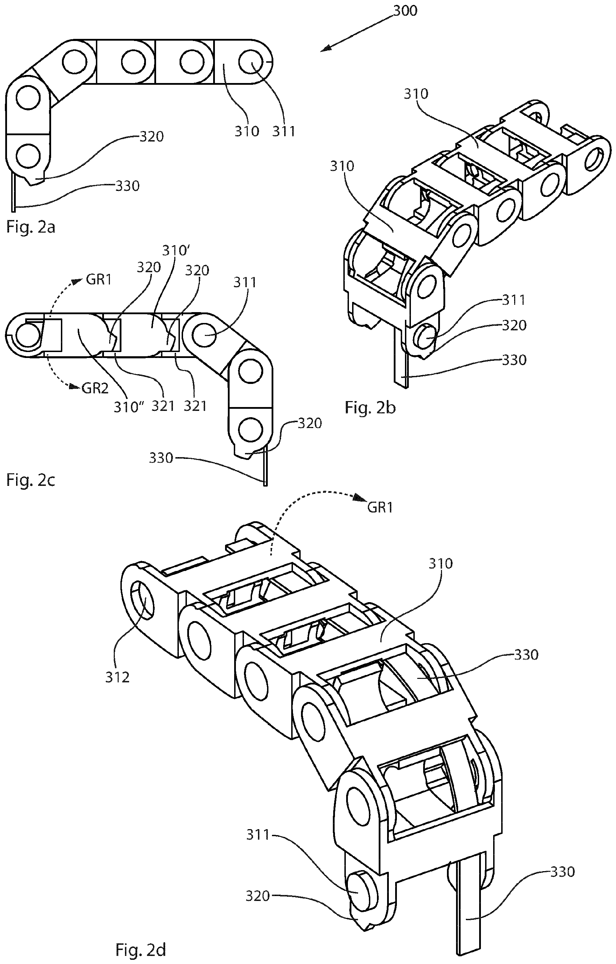

Figuren 2a - 2d zeigen Detailansichten einer ersten Ausführungsform der einseitig flexiblen Kette des erfindungsgemäßen Greifers. Die einzelnen Kettenglieder 310 umfassen bei der gezeigten Ausführungsform jeweils zwei Gelenköffnungen 312, in welche Gelenkfortsätze 311 eines benachbarten Kettengliedes eingreifen.

Wie bereits erwähnt umfasst die bei dem erfindungsgemäßen Greifer verwendete einseitig flexible Kette zum einen eine Biegebegrenzungseinrichtung, die ein Verschwenken der Kettenglieder zueinander in einer ersten Gelenkrichtung GR1 begrenzt und in einer zweiten Gelenkrichtung GR2 erlaubt. Bei der in den Figuren 2a - 2d gezeigten Ausführungsform ist diese Biegebegrenzungseinrichtung gebildet durch zwei Bauteile benachbarter Kettenglieder. Diejenigen Kettenglieder, bei denen das Verschwenken in der ersten Gelenkrichtung GR1 begrenzt sein muss, umfassen dazu einen Vorsprung 320, der mit einem Anschlag 321 eines benachbarten Kettengliedes zusammenwirkt. Wie dies in Figur 2c zu erkennen ist, begrenzt der Anschlag 321 des Kettengliedes 310` ein weiteres Verschwenken des Kettengliedes 310" in Gelenkrichtung GR1, da der Vorsprung 320 des Kettengliedes 310" an den Anschlag von Kettenglied 310' anliegt. Was bei der Figur 2c nicht zu erkennen ist, ist dass gegenüber von dem Anschlag 321 kein entsprechender Anschlag ausgebildet ist, der eine Verschwenkung des Vorsprungs 320 begrenzt.

Die einseitig flexible Kette des erfindungsgemäßen Greifers umfasst ferner eine Ausrichteinrichtung, die die Kettenglieder im nicht-gelenkten Zustand in einer zueinander nicht-verschwenkten, gestreckten Ausrichtung hält und gegen ein Verschwenken in der zweiten Gelenkrichtung sichert. Bei der gezeigten Ausführungsform ist diese Ausrichteinrichtung ausgebildet als ein sich durch die Kette 300 erstreckendes Federelement 330, welches die Kettenglieder 310 in der ersten Gelenkrichtung GR1 gegen die Biegebegrenzungseinrichtung 320, 321 drückt. Dies ist jeweils in den "oberen" gestreckten Abschnitten der Figuren veranschaulicht. Die Ausrichteinrichtung sorgt also dafür, dass die Kette im nicht-gelenkten Zustand linear ausgerichtet ist und eine gewissen Starrheit aufweist, die bei dieser Ausführungsform durch die Federkraft des Federelements 330 definiert ist.

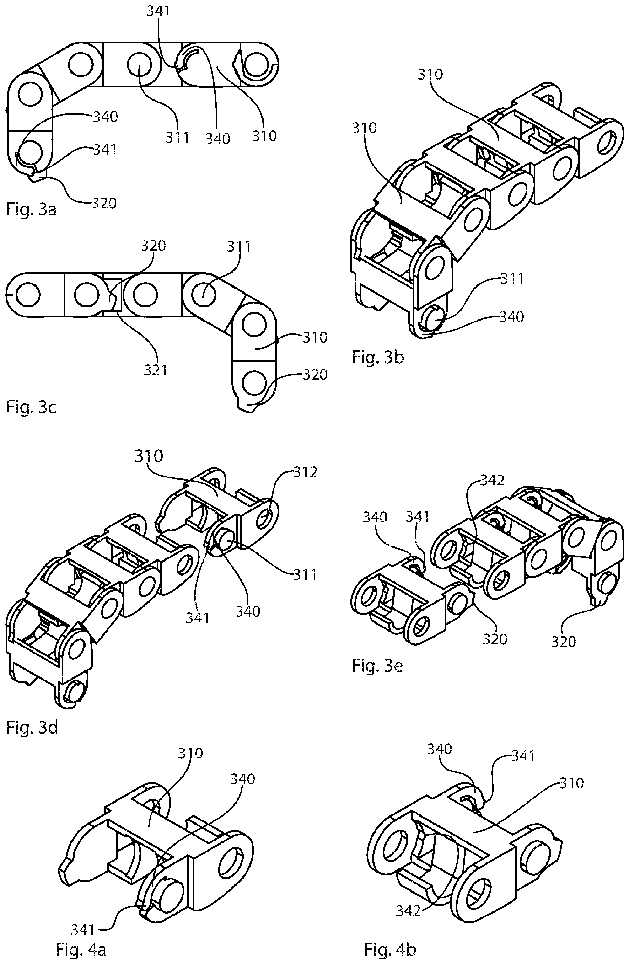

Figuren 3a - 3e zeigen Detailansichten einer zweiten Ausführungsform der einseitig flexiblen Kette des erfindungsgemäßen Greifers, bei welcher die Ausrichteinrichtung gebildet ist durch eine Mehrzahl von Rastarmen 340 mit Rastnasen 341 und Rastaufnahmen 342, wobei ein Rastarm eines Kettengliedes mit einer Rastaufnahme 342 eines benachbarten Kettengliedes wechselwirken kann und wechselwirkende Rastarme und Rastaufnahmen die entsprechenden Kettenglieder gestreckt ausrichten. Um die Verrastung einzuleiten, müssen benachbarte Kettenglieder linear zueinander ausgerichtet werden, so dass es bei dieser Ausführungsform ferner erforderlich ist, dass der zweite Führungsabschnitt 103 des Greifmittels derart ausgebildet ist, dass dieser eine Verrastung benachbarten Kettenglieder bewirkt. Dies ist beispielsweise bei der Ausführungsform gemäß Figur 1 gezeigt und beschrieben.

Figuren 4a und 4b zeigen eine Detailansicht eines Kettengliedes der Ausführungsform der Figuren 3a - 3e, wobei bei Figur 4a der Rastarm 340 samt Rastnase 341 und bei Figur 4b die Rastaufnahme 342 veranschaulicht sind. Ferner ist bei den Figuren der Vorsprung der Biegebegrenzungseinrichtung zu erkennen, die bei der zweiten Ausführungsform entsprechend der ersten Ausführungsform ausgebildet ist, wie dies in Figur 3c zu erkennen ist.

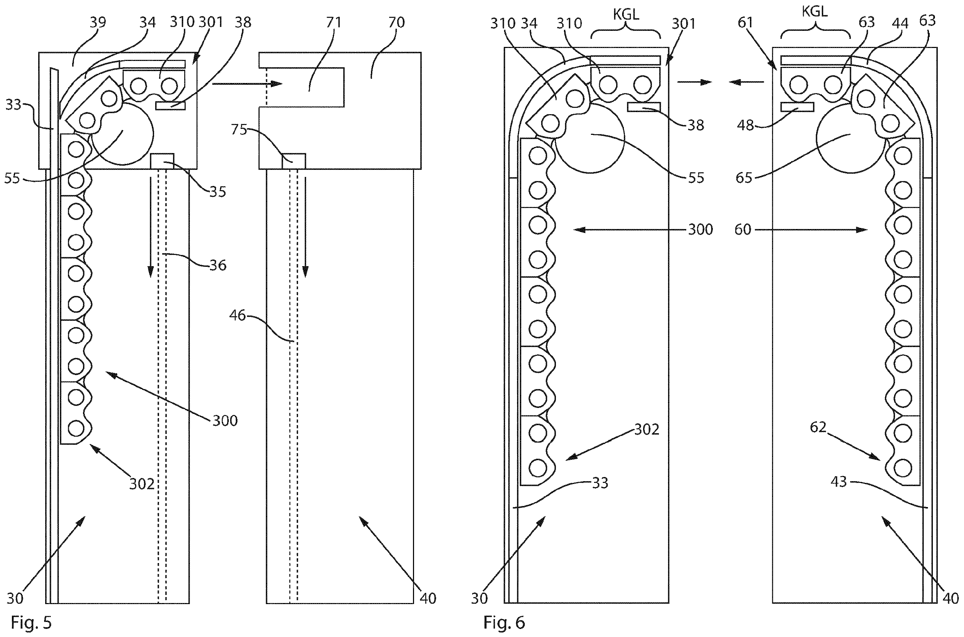

Figur 5 zeigt eine Detailansicht von Abschnitten von Greifmitteln 30, 40 einer zweiten Ausführungsform des erfindungsgemäßen Greifers. Bei dieser zweiten Ausführungsform sind die beiden Greifmittel nicht spiegelsymmetrisch "gleich" aufgebaut, sondern lediglich das "linke" Greifmittel 30 umfasst eine Kette 300 sowie die weiteren unter Bezugnahme auf die erste Ausführungsform beschriebenen Bauteile. Anders als bei der ersten Ausführungsform ist bei dieser Ausführungsform die Umlenkreinrichtung 34 sowie der zweite Führungsabschnitt 38 in Längsrichtung des Greifmittels 30 (also in X-Richtung) bewegbar. Bei der gezeigten Ausführungsform sind die Umlenkeinrichtung 34 sowie der zweite Führungsabschnitt 38 dazu auf einem Schlitten 39 angeordnet. Dieser Schlitten umfasst ferner einen Antrieb 35, der mit einer gestrichelt dargestellten Linearführung 36 zum Bewegen des Schlittens zusammenwirkt. Bei der gezeigten Ausführungsform ist ferner der Kettenantrieb 55 auf dem Schlitten 39 angeordnet. Aufgrund der Bewegbarkeit des Schlittens 39 ist der erste Führungsabschnitt 33 dieser Ausführungsform geringfügig anders aufgebaut und angeordnet.

Bei der zweiten Ausführungsform umfasst das zweite Greifmittel 40 eine Aufnahmeeinrichtung, die nicht durch eine spiegelsymmetrische Baugruppe des Greifmittels 30 realisiert ist, sondern als ein in X-Richtung verfahrbarer Schlitten 70 mit einer Öffnung 71, die ein Kettenglied des ersten Endes der ersten Kette 300 aufnehmen kann. Vorzugsweise ist die Tiefe der Öffnung größer als eine Länge eines Kettengliedes, wie dies auch dargestellt ist. Der Schlitten 70 umfasst ferner einen Antrieb 75, der mit einer Linearführung 46 zum Bewegen des Schlittens 70 in X-Richtung zusammenwirkt.

Figur 6 zeigt eine Detailansicht von Abschnitten der Greifmittel einer dritten Ausführungsform des Greifers. Bei dieser Ausführungsform sind die beiden Greifmittel 30 40 spiegelsymmetrisch aufgebaut, weisen also die gleichen Bauteile in entsprechender Ausrichtung auf. In Figur 6 ist insbesondere die Ausrichtung bzw. Anordnung der beiden einseitig flexiblen Ketten 300, 60 zu erkennen. Die beiden einseitig flexiblen Ketten 300, 60 sind in Figur 6 wieder nur schematisch dargestellt, der genaue Aufbau der zu verwendenden Ketten entspricht beispielsweise den in den Figuren 2a - 3e dargestellten Ausführungsformen. Die ersten Führungsabschnitte 33, 43 der Greifmittel 30, 40 sollen dafür sorgen, dass sich die in X-Richtung erstreckenden Abschnitte der Ketten nicht frei "nach innen" bewegen, sie könnten also auch "innen" auf der Seite der gewellten Seitenflächen der Kettenglieder angeordnet sein.

Figuren 7a und 7b zeigen schematische Draufsichten einer vierten und fünften Ausführungsform des Greifers , wobei unter Bezugnahme auf diese Figuren der erfindungsgemäße Greifer noch einmal detailliert beschrieben wird.

Der Greifer 1 umfasst einen sich in einer X-Richtung und einer Y-Richtung, orthogonal zur X-Richtung, erstreckenden Ablagetisch 10 mit einer Ein- und Auslagerungsstirnseite 11. Der Greifer 1 umfasst ferner eine Greifmittelführungsanordnung 20 mit einem Antrieb 22, der mit einer Linearführung 21 (gestrichelt angedeutet) zusammenwirkt, um die Greifmittelführungsanordnung 20 in X-Richtung zu bewegen. Die Greifmittelführungsanordnung 20 umfasst bei der gezeigten Ausführungsform zwei Greifmittel 30, 40, die mittels eines Antriebs 24a, 24b entlang einer Linearführung 23 in Y-Richtung bewegbar sind, so dass der Abstand zwischen den Greifmitteln an Stückgüter und die Abstände zwischen diesen angepasst werden kann.

Die beiden Greifmittel 30, 40 sind bei beiden Ausführungsformen spiegelsymmetrisch aufgebaut und umfassen jeweils einen der Greifmittelführungsanordnung 20 zugewandten Endabschnitt 31, 41 und einen der Greifmittelführungsanordnung 20 abgewandten Endabschnitt 32, 42. Bei den der Greifmittelführungsanordnung 20 abgewandten Endabschnitten 32, 42 sind jeweils eine Umlenkeinrichtung 34, 44 angeordnet, mittels welcher eine einseitig flexible Kette 300, 60 (nachfolgend auch einfach als Kette bezeichnet) eines Greifmittels in den Raum zwischen den Greifmitteln umlenkbar ist, und zwar in einem Winkel zwischen 70 - 110° bezogen auf die X-Richtung. Die Ketten weisen jeweils ein erstes, der Greifmittelführungsanordnung 20 abgewandtes Ende 301, 61 und ein zweites, der Greifmittelführungsanordnung 20 zugewandtes Ende 302, 62 auf.

Bei den Umlenkeinrichtungen 34, 44 ist jeweils ein mit einer Kette 300, 60 zusammenwirkender Kettenantrieb 55, 65 angeordnet, mit welchem die Ketten in X-Richtung entlang eines Greifmittels bewegt werden können. Mit den Umlenkeinrichtungen wird diese Bewegung in X-Richtung in eine Bewegung in Y-Richtung umgelenkt, so dass die Kettenantriebe die ersten Enden 301, 61 in den Raum zwischen den Greifmitteln umlenken. Die (wie sämtliche Bauteile) lediglich schematisch angedeuteten Kettenantriebe können einfach ein mit den Ketten zusammenwirkendes Kettenzahnrand und einen Drehantrieb umfassen. Bei alternativen Ausführungsformen können die Kettenantriebe an anderer Stelle angeordnet sein oder ggf. vollkommen anders ausgeführt sein - beispielsweise kann ein Kettenglied mit einem sich in X-Richtung bewegenden Mitnehmer verbunden sein, der wiederrum an einer Linearführung bewegt wird.

Die Ketten selbst sind entlang eines ersten Führungsabschnitts 33, 43 geführt, um zu vermeiden, dass sich die Ketten "frei" bewegen und sich ggf. verhaken oder mit dem zweiten Ende willkürlich in den Raum zwischen den Greifmitteln pendeln. Wie genau der erste Führungsabschnitt 33, 34 ausgebildet ist, ist abhängig von der Ausgestaltung der Greifmittel selbst.

Jedes der beiden Greifmittel weist neben dem ersten Führungsabschnitt 33, 43 noch einen zweiten Führungsabschnitt 38, 48 auf, dessen Ausrichtung bestimmt, wie die Ketten in den Raum zwischen den Greifmitteln geleitet werden. Außerdem können die zweiten Führungsabschnitte in Abhängigkeit von der genauen Ausbildung der einseitig flexiblen Ketten noch die Aufgabe haben, die Kettenglieder der Ketten nach dem Umlenken zu verrasten, was unter Bezugnahme auf vorherige Figuren bereits genauer beschrieben wurde.

Bei Figur 7b ist der Greifer mit "ausgefahrenen" Greifmitteln gezeigt, die Greifmittel sind in X-Richtung hin zu einer Lagerfläche 3 neben ein Stückgut 2 bewegt. Ferner ist angedeutet, dass die beiden Ketten 300, 60 in den Raum zwischen den Greifmitteln bewegt sind. Bei den einander zugwandten ersten Enden 301, 61 der Ketten 300, 60 sind bei der fünften Ausführungsform Kopplungsstücke 54, 64 vorgesehen, mit denen die beiden Enden lösbar verbunden sind. Im einfachsten Fall kann eine lösbare biegefeste Stecker/Steckeraufnahme-Verbindung hergestellt werden. Wie man erkennt, hintergreifen die beiden Ketten (bezogen auf die Richtung Stückgut/Ein- und Auslagerungsstirnfläche) das Stückgut 2. Da die Ketten lediglich einseitig flexibel sind (siehe dazu Beschreibung Figuren 2a - 3e), können die freien, zwischen die Greifmittel bewegten Abschnitte (auch aufgrund der Verbindung) nicht "nach oben" bewegt werden, wenn die Greifmittel zurück in Richtung Ablagetisch bewegt werden. Die Ketten können dann bei dieser Bewegung eine Schubkraft auf das Stückgut ausüben (aus "Sicht" der Ketten).

Bei den der Greifmittelführungsanordnung zugewandten Endabschnitten 31, 41 der Greifmittel sind weitere Umlenkeinrichtungen 37, 47 angedeutet, die entsprechend den Greifmitteln bei den abgewandten Endabschnitten wirken, nur dass sie die zweiten Enden 302, 62 der Ketten in den Raum zwischen den Greifmitteln umlenken. Wozu dies sinnvoll und notwendig ist, wird bei einer der nachfolgenden Figuren dargelegt.

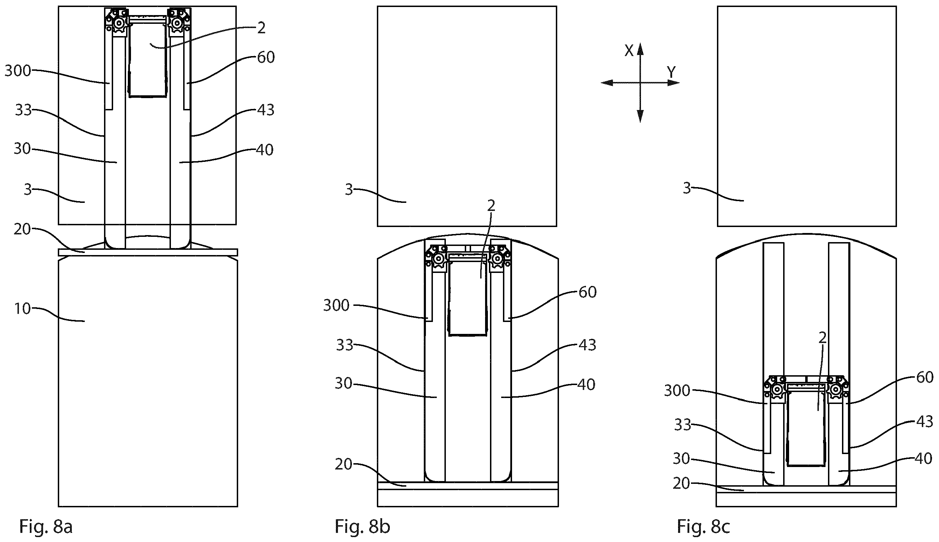

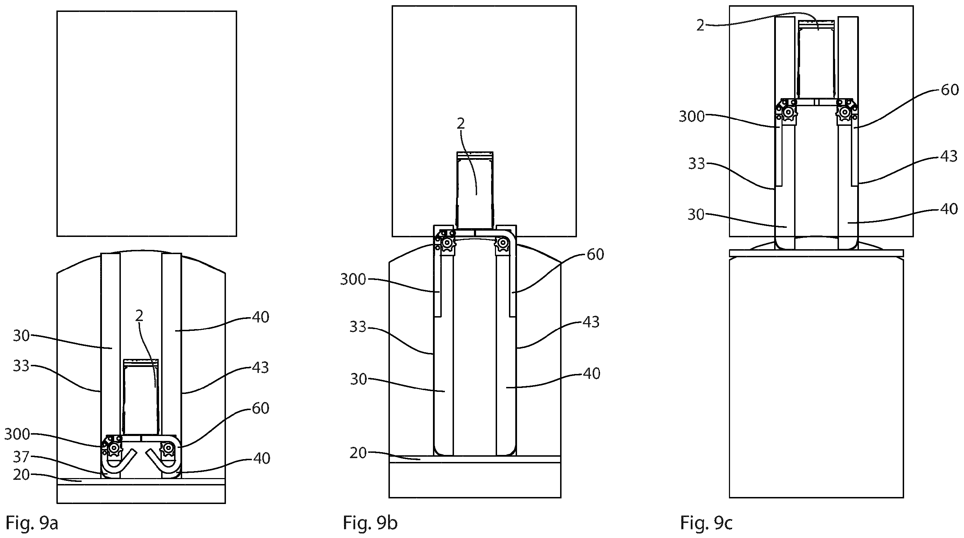

Figuren 8a - 8c zeigen verschiedene Stadien einer Ausführungsform eines Verfahrens zum Bewegen eines Stückguts auf einen erfindungsgemäßen Greifer, wobei die gezeigte Ausführungsform des Greifers zwei spiegelsymmetrisch aufgebaute Greifmittel 30, 40 mit jeweils einer einseitig flexiblen Kette aufweist. Ferner sind die Umlenkeinrichtungen, die nicht explizit dargestellt sind, aber entsprechend vorherigen aufgebaut sind, in X-Richtung bewegbar, wie dies unter Bezugnahme auf Figur 5 mit dem Schlitten 39 beschrieben ist. Die Greifmittelführungsanordnung 20 ist lediglich schematisch dargestellt, andere Bauteile des Greifers sind vollkommen fortgelassen. Die Figuren 8a - 8c (und auch die nachfolgenden Figuren 9a - 9c) sollen lediglich schematisch die Verfahren zum Bewegen von Stückgütern auf einen Greifer und von einem Greifer veranschaulichen.

Bei Figur 8a sind die Greifmittel in X-Richtung hin zu der Lagerfläche 3 neben das Stückgut 2 bewegt. Im Anschluss daran werden die Ketten "ausgefahren" und verbunden, d. h. die Ketten sind über die Umlenkeinrichtungen in den Raum zwischen den Greifmitteln bewegt, lösbar verbunden und hintergreifen das Stückgut 2 (betrachtet aus der Blickrichtung Lagerfläche/Ablagetisch 10 des Greifers). Nach dem Hintergreifen des Stückguts 2 (durch Umlenken der ersten Enden der Ketten zwischen die Greifmittel und lösbares Verbinden von hier nicht dargestellten Kopplungsmitteln) werden die Greifmittel in X-Richtung hin zu dem Ablagetisch 10 bewegt, wodurch die Ketten eine Schubkraft auf das Stückgut ausüben und es auf den Ablagetisch schieben, wie dies in Figur 8b dargestellt ist.

In Figur 8b ist die Stellung gezeigt, die bei einer Ausführungsform, bei der die Umlenkeinrichtungen nicht in X-Richtung bewegbar sind, die Endstellung ist. Im vorliegenden Fall sind die Umlenkeinrichtungen aber bewegbar, wie dies in Figur 8c veranschaulicht ist - die Umlenkeinrichtungen sind in X-Richtung hin weiter zu der Greifmittelführungsanordnung 20 bewegt, wodurch das Stückgut 2 in X-Richtung zu der Greifmittelführungsanordnung 20 bewegt wird.

Figuren 9a - 9c zeigen verschiedene Stadien einer Ausführungsform eines Verfahrens zum Bewegen eines Stückguts von einem erfindungsgemäßen Greifer auf z. B. eine Lagerfläche, wobei dieses Bewegen mit den Greifmitteln und den Ketten durchgeführt wird. Bei der in den Figuren 8a - 8c und 9a - 9c gezeigten Ausführungsform des Greifers weisen die Greifmittel bei den Greifmittelführungsanordnung 20 zugewandten Endabschnitten der Greifmittel weitere Umlenkeinrichtungen 37, 47 auf, die derart ausgebildet sind, dass sie die zweiten Enden der Ketten in den Raum zwischen den Greifmitteln lenken, wie dies in Figur 9a veranschaulicht ist.

Um ein Stückgut von dem Ablagetisch 10 zu schieben, muss dieses (bezogen auf die Blickrichtung Greifmittelführungseinrichtung/Ein- und Auslagerungsstirnseite) wieder hintergriffen werden. Dazu müssen die in X-Richtung bewegbaren Umlenkeinrichtungen (zum Beispiel ausgehend von der Stellung in Figur 8c) weiter zu der Greifmittelführungsanordnung 20 und hinter (gemäß Figur 9a "unter") das Stückgut gebracht werden. Um dabei das Stückgut nicht zu bewegen, ist es notwendig, die ersten Enden der Ketten zu lösen und die Ketten einzufahren, sollte dies noch nicht geschehen sein. Mit dem "Einfahren" verlängern sich die Abschnitte der Ketten, die parallel zu den Greifmitteln in X-Richtung angeordnet sind. Die weiteren Umlenkeinrichtungen lenken dann die zweiten Enden der Ketten in den Raum zwischen den Greifmitteln - dies geschieht in Abhängigkeit von der Länge der Ketten und der Position der ersten und zweiten Umlenkeinrichtung bereits beim Einfahren oder "erst" beim weiteren Bewegen der ersten und zweiten Umlenkeinrichtung unter bzw. hinter das zu bewegende Stückgut.

Wenn die Umlenkeinrichtungen an die passenden Positionen bewegt sind, werden die Ketten mit den zugeordneten Kettenantrieben derart bewegt, dass die ersten Enden durch die erste und die zweite, der Greifmittelführungsanordnung 20 abgewandten Umlenkeinrichtungen in den Raum zwischen den Greifmitteln bewegt werden, und zwar "unterhalb" des Stückguts 2. Sodann werden die ersten Enden der Ketten derart lösbar miteinander verbunden, dass bei Bewegung der Greifmittel in X-Richtung zur Ein- und Auslagerungsstirnseite Schubkräfte von den Ketten auf das Stückgut übertragen werden können. Bei dieser Schubbewegung ist eine Verbindung der Enden der Ketten wesentlich, da bei der Schubbewegung hin zu der Ein- und Auslagerungsstirnseite die Ketten in ihrer flexiblen Richtung beansprucht werden.

Nachdem die lösbare Verbindung erzeugt ist, werden die Greifmittel in X-Richtung hin zu der und über die Ein- und Auslagerungsstirnseite bewegt und das Stückgut schließlich auf eine Lagerfläche oder einen anderen Ort innerhalb einer Lagervorrichtung - beispielsweise auf ein Förderband oder eine Auslagerungsrutsche - bewegt.

## Patentansprüche

1. Greifer zum Bewegen von Stückgütern, aufweisend:
einen sich in einer ersten horizontalen Richtung (X-Richtung) und einer zweiten horizontalen Richtung (Y-Richtung), orthogonal zur ersten horizontalen Richtung, erstreckenden Ablagetisch (10) mit zumindest einer sich in Y-Richtung erstreckenden Ein- und Auslagerungsstirnseite (11),
eine über dem Ablagetisch (10) angeordnete Greifmittelführungsanordnung (20) mit einem sich in X-Richtung erstreckenden und in X-Richtung verfahrbaren Greifmittel (100; 30) mit einem der Greifmittelführungsanordnung (20) abgewandten und einem zugewandten Endabschnitt (101, 102),
wobei das Greifmittel (100; 30) eine erste Umlenkeinrichtung (104; 34), einen ersten sich in X-Richtung erstreckenden Führungsabschnitt (103; 33) und
einen zweiten Führungsabschnitt (110; 38) umfasst,
**dadurch gekennzeichnet, dass** das Greifmittel (104; 34)
eine mit der Umlenkeinrichtung (104; 34) zusammenwirkende erste einseitig flexible Kette (300) mit einer Mehrzahl von Kettengliedern (310) mit einer Kettengliedlänge KGL umfasst,
wobei die einseitig flexible Kette (300) eine Biegebegrenzungseinrichtung (320, 321) umfasst, die ein Verschwenken der Kettenglieder zueinander in einer ersten Gelenkrichtung (GR1) begrenzt und in einer zweiten Gelenkrichtung (GR2) erlaubt, und wobei die erste einseitig flexible Kette (300) ein erstes, der Greifmittelführungsanordnung (20) abgewandtes Ende (301) und ein zweites, der Greifmittelführungsanordnung (20) zugewandtes Ende (302) aufweist,
wobei die einseitig flexible Kette (300) mittels eines Antriebs (155; 55) bewegbar und mittels der Umlenkeinrichtung in einem Winkel zwischen 70 - 110° zur X-Richtung in der zweiten Gelenkrichtung umlenkbar ist,
wobei die einseitig flexible Kette (300) derart angeordnet ist, dass bei Bewegung des Greifmittels (100; 30) in X-Richtung Schubkräfte auf ein auf den Ablagetisch (10) zu bewegendes Stückgut übertragbar sind,
und wobei
die einseitig flexible Kette (300) eine Ausrichteinrichtung aufweist, die die Kettenglieder im nicht-gelenkten Zustand in einer zueinander nicht-verschwenkten, gestreckten Ausrichtung hält und gegen ein Verschwenken in der zweiten Gelenkrichtung sichert.

2. Greifer zum Bewegen von Stückgütern nach Anspruch 1,
**dadurch gekennzeichnet, dass** die Ausrichteinrichtung der einseitig flexiblen Kette (300) als ein sich durch die Kette erstreckendes Federelement (330) ausgebildet ist, welches die Kettenglieder (310) in die erste Gelenkrichtung (GR1) gegen die Biegebegrenzungseinrichtung (320, 321) drückt.

3. Greifer zum Bewegen von Stückgütern nach Anspruch 1,
**dadurch gekennzeichnet,**
**dass** die Ausrichteinrichtung gebildet ist durch eine Mehrzahl von Rastarmen (340) mit Rastnasen (341), und Rastaufnahmen (342), wobei ein Rastarm eines Kettengliedes (310) mit einer Rastaufnahme (342) eines benachbarten Kettengliedes wechselwirken kann und wechselwirkende Rastarme und Rastaufnahmen die entsprechenden Kettenglieder gestreckt ausrichten, und
**dass** der zweite Führungsabschnitt (103) derart ausgebildet ist, dass dieser eine Verrastung benachbarten Kettenglieder bewirkt.

4. Greifer zum Bewegen von Stückgütern nach einem der Ansprüche 1 - 3, **dadurch gekennzeichnet, dass** der Greifer ein zweites Greifmittel (40) aufweist, wobei das zweite Greifmittel (40) eine Aufnahmeeinrichtung aufweist, die mit dem ersten Ende (301) der ersten einseitig flexiblen Kette (300) derart lösbar verbindbar ist, dass bei Bewegung der Greifmittel in X-Richtung zur Ein- und Auslagerungsstirnseite (11) eine Schubkraft auf ein Stückgut übertragen wird.

5. Greifer zum Bewegen von Stückgütern nach einem der Ansprüche 1 - 4,
**dadurch gekennzeichnet, dass** die erste Umlenkeinrichtung (34) und/oder die Aufnahmeeinrichtung bei den der Greifmittelführungsanordnung (20) abgewandten Endabschnitten der Greifmittel (100; 30, 40) angeordnet sind.

6. Greifer zum Bewegen von Stückgütern nach Anspruch einem der Ansprüche 1 - 5,
**dadurch gekennzeichnet, dass** die erste Umlenkeinrichtung (34) und/oder die Aufnahmeeinrichtung jeweils mittels eines Antriebs (35, 75) in X-Richtung bewegbar sind.

7. Greifer zum Bewegen von Stückgütern nach einem der Ansprüche 4 - 6,
**dadurch gekennzeichnet, dass** die Aufnahmeeinrichtung des zweiten Greifmittels (40) eine Öffnung (71) zum Aufnehmen des ersten Endes (301) der ersten Kette (300) umfasst, wobei die Öffnung vorzugsweise eine Tiefe aufweist, die größer als eine Kettengliedlänge ist.

8. Greifer (1) zum Bewegen von Stückgütern nach einem der Ansprüche 4 - 7,
**dadurch gekennzeichnet, dass** die Aufnahmeeinrichtung bereitgestellt ist durch
ein erstes Ende (61) einer zweiten mit einer zweiten Umlenkeinrichtung (44) zusammenwirkenden einseitig flexiblen Kette (60), welche mittels eines zweiten Kettenantriebs (65) und mittels der zweiten Umlenkeinrichtung (44) in einem Winkel zwischen 70 - 110° zur X-Richtung umlenkbar ist, wodurch das erste Ende (61) der zweiten Kette (60) in den Raum zwischen den Greifmitteln (30, 40) bewegbar ist und wobei die ersten Enden (301, 61) der Ketten (300, 60) derart lösbar miteinander verbindbar sind, dass bei Bewegung der Greifmittel in X-Richtung zur Ein- und Auslagerungsstirnseite (11) Schubkraft übertragen wird.

9. Greifer (1) zum Bewegen von Stückgütern nach einem der Ansprüche 1 - 8,
**dadurch gekennzeichnet, dass** ein Greifmittel (100; 30, 40) mit einer Umlenkeinrichtung (104; 34, 44) bei dem der Greifmittelführungsanordnung (20) abgewandten Endabschnitt bei dem der Greifmittelführungsanordnung (20) zugewandten Endabschnitt eine weitere Umlenkeinrichtung (37, 47) aufweist, wobei mit der weiteren Umlenkeinrichtung eine einseitig flexible Kette aus der X-Richtung, vorzugsweise in einem Winkel < 90°, umlenkbar ist, wodurch das zweite Ende einer Kette über den Ablagetisch (10) bewegbar ist.

10. Verfahren zum Bewegen von Stückgütern auf einen Greifer nach einem der Ansprüche 1 - 9, wobei
der Greifer zu einer einem auszulagernden Stückgut (2) zugeordneten Lagerfläche (3) verfahren wird,
zumindest ein Greifmittel (100; 30, 40) in der X-Richtung zur Lagerfläche (3) bewegt wird, so dass das Stückgut (2) neben diesem angeordnet ist,
die erste einseitig flexible Kette (300) mittels des zugeordneten Kettenantriebes (155; 55) derart bewegt wird, dass das erste Ende (301) durch die erste, der Greifmittelführungsanordnung (20) abgewandte Umlenkeinrichtung (104; 34) in einem Winkel zwischen 70 - 110° zur X-Richtung ausgefahren wird, wobei benachbarte Kettenglieder (310) stromab der der Greifmittelführungsanordnung (20) abgewandten Umlenkeinrichtung (104; 34) in eine zueinander nicht-verschwenkte, gestreckte Ausrichtung gebracht werden, so dass ein gestreckter Abschnitt der einseitig flexiblen Kette derart hinter das Stückgut bewegt wird, dass das Stückgut zwischen dem gestreckten Abschnitt der Kette und dem Ablagetisch angeordnet ist, und
das zumindest eine Greifmittel (100; 30, 40) in X-Richtung zu der Ablagefläche bewegt wird, wobei der gestreckte Abschnitt der ersten einseitig flexiblen Kette das Stückgut auf die Ablagefläche schiebt.

11. Verfahren zum Bewegen von Stückgütern auf einen Greifer nach einem der Ansprüche 3 - 9, wobei
der Greifer zu einer einem auszulagernden Stückgut (2) zugeordneten Lagerfläche (3) verfahren wird,
die Greifmittel (30, 40) in der X-Richtung zur Lagerfläche (3) bewegt werden, so dass das Stückgut (2) zwischen diesen angeordnet ist,
die erste einseitig flexible Kette (300) mittels des zugeordneten Kettenantriebes (55) derart bewegt wird, dass das erste Ende (301) durch die erste, der Greifmittelführungsanordnung (20) abgewandte Umlenkeinrichtung (34) in einem Winkel zwischen 70 - 110° zur X-Richtung ausgefahren wird, wobei benachbarte Kettenglieder (310) stromab der der Greifmittelführungsanordnung (20) abgewandte Umlenkeinrichtung (34) in eine zueinander nicht-verschwenkte, gestreckte Ausrichtung gebracht werden, so dass ein gestreckter Abschnitt der einseitig flexiblen Kette derart hinter das Stückgut bewegt wird, dass das Stückgut zwischen dem gestreckten Abschnitt der Kette und der Ablagefläche angeordnet ist,
das erste Ende (301) der ersten Kette (300) derart lösbar mit der Aufnahmeeinrichtung des zweiten Greifmittels (40) verbunden wird, dass bei Bewegung der Greifmittel in X-Richtung zur Ein- und Auslagerungsstirnseite (11) Schubkräfte auf das Stückgut übertragbar sind, und
die Greifmittel (30, 40) in X-Richtung zu dem Ablagetisch (10) bewegt werden, so dass das Stückgut (2) auf den Ablagetisch (10) des Greifers geschoben wird.

12. Verfahren zum Bewegen von Stückgütern nach Anspruch 11, **dadurch gekennzeichnet, dass** das erste Ende (301) lösbar mit der Aufnahmeeinrichtung verbunden wird, indem
die zweite einseitig flexible Kette (60) mittels des zugeordneten Kettenantriebes (65) derart bewegt wird, dass das erste Ende (61) der zweiten Kette (60) durch die zweite, der Greifmittelführungsanordnung (20) abgewandte Umlenkeinrichtung (44) in den Raum zwischen den Greifmitteln (30, 40) bewegt wird, und
die ersten Enden (301, 61) der Ketten (300, 60) derart lösbar miteinander verbunden werden, dass bei Bewegung der Greifmittel in X-Richtung zur Ein- und Auslagerungsstirnseite (11) Schubkraft übertragen wird.

13. Verfahren zum Bewegen von Stückgütern von einem Greifer nach einem der Ansprüche 6 - 9 auf eine Lagerfläche (3), wobei,
die der Greifmittelführungsanordnung (20) abgewandten Umlenkeinrichtungen (34, 44) oder eine entsprechende Umlenkeinrichtung und die Aufnahmeeinrichtung zu den der Greifmittelführungsanordnung (20) zugewandten Endabschnitten (31, 41) der Greifmittel (30, 40) bewegt werden,
die erste einseitig flexible Kette (300) mittels des zugeordneten Kettenantriebes (55) derart bewegt wird, dass das erste freie Ende (301) durch die erste, der Greifmittelführungsanordnung (20) abgewandte Umlenkeinrichtung (34) in den Raum zwischen den Greifmitteln (30, 40) bewegt wird,
das erste Ende (301) der ersten Kette (300) derart lösbar mit der Aufnahmeeinrichtung des zweiten Greifmittels (40) verbunden wird, dass bei Bewegung der Greifmittel in X-Richtung zur Ein- und Auslagerungsstirnseite (11) Schubkräfte übertragbar sind, und
die Greifmittel (30, 40) in X-Richtung über die Ein- und Auslagerungsstirnseite (11) bewegt werden, so dass das Stückgut von dem Auflagetisch des Greifers bewegt wird.

## Claims

1. Gripper for moving piece goods, comprising:
a deposit table (10) extending in a first horizontal direction (X direction) and a second horizontal direction (Y direction) which is orthogonal to the first horizontal direction, with at least one storage and retrieval end face (11) extending in the Y direction,
a gripping means guide arrangement (20) which is arranged above the deposit table (10) and has a gripping means (100; 30) which extends in the X direction and is movable in the X direction and has an end portion remote (101) from and an end portion close (102) to the gripping means guide arrangement (20),
the gripping means (100; 30) comprising a
first deflection device (104; 34), a first guide portion (103; 33) extending in the X direction and a second guide portion (110; 38)
**characterized in that** the gripping means (104; 34) comprises
a first unilaterally flexible chain (300) which interacts with the deflection device (104; 34) and has a plurality of chain links (310) with a chain link length KGL,
the unilaterally flexible chain (300) comprising a bending limitation device (320, 321) which limits pivoting of the chain links relative to one another in a first articulation direction (GR1) and allows it in a second articulation direction (GR2), and the first unilaterally flexible chain (300) having a first end (301) remote from the gripping means guide arrangement (20) and a second end (302) close to the gripping means guide arrangement (20),
wherein the unilaterally flexible chain (300) can be moved by means of a drive (155; 55) and can be deflected by means of the deflection device in the second articulation direction at an angle of between 70-110° to the X direction,
wherein the unilaterally flexible chain (300) is arranged in such a way that, when the gripping means (100; 30) is moved in the X direction, pushing forces can be transmitted to a piece good to be moved onto the deposit table (10),
and wherein the unilaterally flexible chain (300) comprises an alignment device which, in the non-articulated state, holds the chain links in a mutually non-pivoted, stretched alignment and secures them against pivoting in the second articulation direction.

2. Gripper for moving piece goods according to claim 1, **characterized in that** the alignment device of the unilaterally flexible chain (300) is designed as a spring element (330) that extends through the chain and presses the chain links (310) in the first articulation direction (GR1) against the bending limitation device (320, 321).

3. Gripper for moving piece goods according to claim 1, **characterized**
**in that** the alignment device is formed by a plurality of latching arms (340) with latching lugs (341) and latching receptacles (342), wherein a latching arm of a chain link (310) can interact with a latching receptacle (342) of an adjacent chain link and interacting latching arms and latching receptacles align the corresponding chain links in a stretched manner, and
**in that** the second guide portion (103) is designed in such a way that it causes adjacent chain links to lock.

4. Gripper for moving piece goods according to any of claims 1-3, **characterized in that** the gripper has a second gripping means (40), the second gripping means (40) having a receiving device which can be detachably connected to the first end (301) of the first unilaterally flexible chain (300) in such a way that a pushing force is transmitted to a piece good when the gripping means are moved in the X direction toward the storage and retrieval end face (11).

5. Gripper for moving piece goods according to any of claims 1-4,
**characterized in that** the first deflection device (34) and/or the receiving device are arranged at the end portions of the gripping means (100; 30, 40) that are remote from the gripping means guide arrangement (20).

6. Gripper for moving piece goods according to claim any of claims 1-5,
**characterized in that** the first deflection device (34) and/or the receiving device can each be moved in the X direction by means of a drive (35, 75).

7. Gripper for moving piece goods according to any of claims 4-6,
**characterized in that** the receiving device of the second gripping means (40) comprises an opening (71) for receiving the first end (301) of the first chain (300), the opening preferably having a depth greater than a chain link length.

8. Gripper (1) for moving piece goods according to any of claims 4-7,
**characterized in that** the receiving device is provided by
a first end (61) of a second unilaterally flexible chain (60) which interacts with a second deflection device (44) and can be moved by means of a second chain drive (65) and can be deflected by means of the second deflection device (44) at an angle of between 70-110° to the X direction, as a result of which the first end (61) of the second chain (60) can be moved into the space between the gripping means (30, 40) and the first ends (301, 61) of the chains (300, 60) can be detachably interconnected such that a pushing force is transmitted when the gripping means are moved in the X direction to the storage and retrieval end face (11).

9. Gripper (1) for moving piece goods according to any of claims 1-8,
**characterized in that** a gripping means (100; 30, 40) having a deflection device (104; 34, 44) at the end portion remote from the gripping means guide arrangement (20) has a further deflection device (37, 47) at the end portion close to the gripping means guide arrangement (20), with a unilaterally flexible chain being deflectable from the X direction, preferably at an angle < 90°, by means of the further deflection device, as a result of which the second end of a chain can be moved over the deposit table (10).

10. Method for moving piece goods onto a gripper according to any of claims 1-9, wherein
the gripper is moved toward a storage surface (3) associated with a piece good (2) to be retrieved,
at least one gripping means (100; 30, 40) is moved in the X direction toward the storage surface (3) so that the piece good (2) is arranged next to it,
the first unilaterally flexible chain (300) is moved by means of the associated chain drive (155; 55) in such a way that the first end (301) is extended by the first deflection device (104; 34) remote from the gripping means guide arrangement (20) at an angle of between 70-110° to the X direction, wherein adjacent chain links (310) downstream of the deflection device (104; 34) remote from the gripping means guide arrangement (20) are brought into a mutually non-pivoted, stretched alignment so that a stretched portion of the unilaterally flexible chain is moved behind the piece good in such a way that the piece good is arranged between the stretched portion of the chain and the deposit table, and
the at least one gripping means (100; 30, 40) is moved in the X direction toward the deposit surface, with the stretched portion of the first unilaterally flexible chain pushing the piece good onto the deposit surface.

11. Method for moving piece goods onto a gripper according to any of claims 3-9, wherein
the gripper is moved toward a storage surface (3) associated with a piece good (2) to be retrieved,
the gripping means (30, 40) are moved in the X direction toward the storage surface (3) so that the piece good (2) is arranged between them,
the first unilaterally flexible chain (300) is moved by means of the associated chain drive (55) in such a way that the first end (301) is extended by the first deflection device (34) remote from the gripping means guide arrangement (20) at an angle of between 70-110° to the X direction, wherein adjacent chain links (310) downstream of the deflection device (34) remote from the gripping means guide arrangement (20) are brought into a mutually non-pivoted, stretched alignment so that a stretched portion of the unilaterally flexible chain is moved behind the piece good in such a way that the piece good is arranged between the stretched portion of the chain and the deposit surface,
the first end (301) of the first chain (300) is detachably connected to the receiving device of the second gripping means (40) in such a way that pushing forces can be transmitted to the piece good when the gripping means are moved in the X direction toward the storage and retrieval end face (11), and
the gripping means (30, 40) are moved in the X direction toward the deposit table (10) so that the piece good (2) is pushed onto the deposit table (10) of the gripper.

12. Method for moving piece goods according to claim 11, **characterized in that** the first end (301) is detachably connected to the receiving device by
moving the second unilaterally flexible chain (60) by means of the associated chain drive (65) in such a way that the first end (61) of the second chain (60) is moved into the space between the gripping means (30, 40) by the second deflection device (44) remote from the gripping means guide arrangement (20), and
the first ends (301, 61) of the chains (300, 60) are detachably interconnected in such a way that a pushing force is transmitted when the gripping means are moved in the X direction toward the storage and retrieval end face (11).

13. Method for moving piece goods from a gripper according to any of claims 6-9 onto a storage surface (3), wherein
the deflection devices (34, 44) remote from the gripping means guide arrangement (20) or a corresponding deflection device and the receiving device are moved toward the end portions (31, 41) of the gripping means (30, 40) that are close to the gripping means guide arrangement (20),
the first unilaterally flexible chain (300) is moved by means of the associated chain drive (55) in such a way that the first free end (301) is moved into the space between the gripping means (30, 40) by the first deflection device (34) remote from the gripping means guide arrangement (20),
the first end (301) of the first chain (300) is detachably connected to the receiving device of the second gripping means (40) in such a way that pushing forces can be transmitted when the gripping means are moved in the X direction toward the storage and retrieval end face (11), and
the gripping means (30, 40) are moved in the X direction over the storage and retrieval end face (11) so that the piece good is moved from the supporting table of the gripper.

## Revendications

1. Préhenseur pour déplacer des articles, comprenant :
une table de dépôt (10) s'étendant dans une première direction horizontale (direction X) et dans une deuxième direction horizontale (direction Y), orthogonale à la première direction horizontale, avec au moins un côté frontal d'entrée et de sortie (11) s'étendant dans la direction Y,
un agencement de guidage des moyens de préhension (20) disposé au-dessus de la table de dépôt (10) avec un moyen de préhension (100 ; 30) s'étendant dans la direction X et déplaçable dans la direction X avec une section d'extrémité (101) opposée à l'agencement de guidage des moyens de préhension (20) et une section d'extrémité (102) tournée vers celui-ci,
le moyen de préhension (100 ; 30) comportant un
premier dispositif de renvoi (104 ; 34), une première section de guidage (103 ; 33) s'étendant dans la direction X et une deuxième section de guidage (110 ; 38),
**caractérisé en ce que** le moyen de préhension (104 ; 34)
comprend une première chaîne flexible unilatérale (300) coopérant avec le dispositif de renvoi (104 ; 34) et comportant une pluralité de maillons de chaîne (310) d'une longueur de maillon de chaîne KGL,
la chaîne flexible unilatérale (300) comprenant un dispositif de limitation de la flexion (320, 321) qui limite un pivotement des maillons de chaîne les uns par rapport aux autres dans une première direction d'articulation (GR1) et qui permet un pivotement dans une deuxième direction d'articulation (GR2), et la première chaîne flexible unilatérale (300) présentant une première extrémité (301) opposée à l'agencement de guidage des moyens de préhension (20) et une deuxième extrémité (302) tournée vers l'agencement de guidage des moyens de préhension (20),
la chaîne flexible unilatérale (300) pouvant être déplacée au moyen d'un entraînement (155 ; 55) et pouvant être déviée au moyen du dispositif de renvoi selon un angle compris entre 70 et 110° par rapport à la direction X dans la deuxième direction d'articulation,
la chaîne flexible unilatérale (300) étant disposée de telle sorte que, lors du déplacement du moyen de préhension (100 ; 30) dans la direction X, des forces de poussée peuvent être transmises à un article à déplacer sur la table de dépôt (10),
et la chaîne flexible unilatérale (300) présentant un dispositif d'alignement qui, à l'état non articulé, maintient les maillons de la chaîne dans une orientation étirée non pivotée les uns par rapport aux autres et les empêche de pivoter dans la deuxième direction d'articulation.

2. Préhenseur pour déplacer des articles selon la revendication 1, **caractérisé en ce que** le dispositif d'alignement de la chaîne flexible unilatérale (300) est conçu comme un élément à ressort (330) s'étendant à travers la chaîne, qui pousse les maillons de chaîne (310) dans la première direction d'articulation (GR1) contre le dispositif de limitation de la flexion (320, 321).

3. Préhenseur pour déplacer des articles selon la revendication 1, **caractérisée en ce**
**que** le dispositif d'alignement est formé par une pluralité de bras d'encliquetage (340) avec des ergots d'encliquetage (341), et des logements d'encliquetage (342), un bras d'encliquetage d'un maillon de chaîne (310) pouvant interagir avec un logement d'encliquetage (342) d'un maillon de chaîne voisin, et des bras d'encliquetage et des logements d'encliquetage interagissant alignant les maillons de chaîne correspondants de manière étirée, et
**que** la deuxième section de guidage (103) est conçue de telle sorte qu'elle provoque un encliquetage de maillons de chaîne voisins.

4. Préhenseur pour déplacer des articles selon l'une des revendications 1 à 3, **caractérisée en ce que** le préhenseur présente un deuxième moyen de préhension (40), le deuxième moyen de préhension (40) présentant un dispositif de réception qui peut être relié de manière amovible à la première extrémité (301) de la première chaîne flexible unilatérale (300) de telle sorte que, lors du déplacement des moyens de préhension dans la direction X vers le côté frontal d'entrée et de sortie (11), une force de poussée est transmise à un article.

5. Préhenseur pour déplacer des articles selon l'une des revendications 1 à 4,
**caractérisé en ce que** le premier dispositif de renvoi (34) et/ou le dispositif de réception sont disposés au niveau des sections d'extrémité des moyens de préhension (100 ; 30, 40) opposées à l'agencement de guidage des moyens de préhension (20) .

6. Préhenseur pour déplacer des articles selon la revendication l'une des revendications 1 à 5,
**caractérisé en ce que** le premier dispositif de renvoi (34) et/ou le dispositif de réception peuvent être déplacés chacun dans la direction X au moyen d'un entraînement (35, 75).

7. Préhenseur pour déplacer des articles selon l'une des revendications 4 à 6,
**caractérisé en ce que** le dispositif de réception du deuxième moyen de préhension (40) comprend une ouverture (71) pour recevoir la première extrémité (301) de la première chaîne (300), l'ouverture présentant de préférence une profondeur supérieure à une longueur de maillon de chaîne.

8. Préhenseur (1) pour déplacer des articles selon l'une des revendications 4 à 7,
**caractérisé en ce que** le dispositif de réception est fourni par
une première extrémité (61) d'une deuxième chaîne flexible unilatérale (60), coopérant avec un deuxième dispositif de renvoi (44), qui peut être déviée d'un angle compris entre 70 et 110° par rapport à la direction X au moyen d'un deuxième entraînement de chaîne (65) et au moyen du deuxième dispositif de renvoi (44), grâce à quoi la première extrémité (61) de la deuxième chaîne (60) peut être déplacée dans l'espace entre les moyens de préhension (30, 40) et les premières extrémités (301, 61) des chaînes (300, 60) pouvant être reliées entre elles de manière amovible de telle sorte que, lors du déplacement des moyens de préhension dans la direction X vers le côté frontal d'entrée et de sortie (11), une force de poussée est transmise.

9. Préhenseur (1) pour déplacer des articles selon l'une des revendications 1 à 8,
**caractérisé en ce qu'**un moyen de préhension (100 ; 30, 40) avec un dispositif de renvoi (104 ; 34, 44) présente, dans la section d'extrémité opposée à l'agencement de guidage des moyens de préhension (20), un autre dispositif de renvoi (37, 47) dans la section d'extrémité tournée vers l'agencement de guidage des moyens de préhension (20), une chaîne flexible unilatérale pouvant être déviée de la direction X, de préférence selon un angle < 90°, avec l'autre dispositif de renvoi, ce qui permet de déplacer la deuxième extrémité d'une chaîne au-dessus de la table de dépôt (10).

10. Procédé pour déplacer des articles sur un préhenseur selon l'une des revendications 1 à 9, dans lequel
le préhenseur est déplacé vers une surface de stockage (3) associée à un article à déstocker (2),
au moins un moyen de préhension (100 ; 30, 40) est déplacé dans la direction X vers la surface de stockage (3), de sorte que l'article (2) est disposée à côté de celle-ci,
la première chaîne flexible unilatérale (300) est déplacée au moyen de l'entraînement de chaîne (155 ; 55) associé de telle sorte que la première extrémité (301) est déployée par le premier dispositif de renvoi (104 ; 34) opposé à l'agencement de guidage des moyens de préhension (20) selon un angle compris entre 70 et 110° par rapport à la direction X, des maillons de chaîne (310) voisins étant déplacés en aval du dispositif de renvoi (104 ; 34) opposé à l'agencement de guidage des moyens de préhension (20) sont amenés dans une orientation étirée non pivotée l'un par rapport à l'autre, de sorte qu'une section étirée de la chaîne flexible unilatérale est déplacée derrière l'article de sorte que l'article est disposée entre la section étirée de la chaîne et la table de dépôt, et
l'au moins un moyen de préhension (100 ; 30, 40) est déplacé dans la direction X vers la surface de dépôt, la partie allongée de la première chaîne flexible unilatérale poussant l'article sur la surface de dépôt.

11. Procédé pour déplacer des articles sur un préhenseur selon l'une des revendications 3 à 9, dans lequel
le préhenseur est déplacé vers une surface de stockage (3) associée à un article à déstocker (2),
les moyens de préhension (30, 40) sont déplacés dans la direction X vers la surface de stockage (3), de sorte que l'article (2) est disposée entre ceux-ci,
la première chaîne flexible unilatérale (300) est déplacée au moyen de l'entraînement de chaîne (55) associé de telle sorte que la première extrémité (301) est déployée par le premier dispositif de renvoi (34) opposé à l'agencement de guidage des moyens de préhension (20) selon un angle compris entre 70 et 110° par rapport à la direction X, des maillons de chaîne (310) voisins étant amenés en aval du dispositif de renvoi (34) opposé à l'agencement de guidage des moyens de préhension (20) dans une orientation étirée non pivotée les uns par rapport aux autres, de sorte qu'une section étirée de la chaîne flexible unilatérale est déplacée derrière l'article de sorte que l'article est disposée entre la section étirée de la chaîne et la surface de dépôt,
la première extrémité (301) de la première chaîne (300) est reliée de manière amovible au dispositif de réception du deuxième moyen de préhension (40) de telle sorte que, lors du déplacement des moyens de préhension dans la direction X vers le côté frontal d'entrée et de sortie (11), des forces de poussée peuvent être transmises à l'article, et
les moyens de préhension (30, 40) sont déplacés dans la direction X vers la table de dépôt (10), de sorte que l'article (2) est poussée sur la table de dépôt (10) du préhenseur.

12. Procédé pour déplacer des articles selon la revendication 11, **caractérisé en ce que** la première extrémité (301) est reliée de manière amovible au dispositif de réception par le fait que
la deuxième chaîne flexible unilatérale (60) est déplacée au moyen de l'entraînement de chaîne (65) associé de telle sorte que la première extrémité (61) de la deuxième chaîne (60) est déplacée par le deuxième dispositif de renvoi (44) opposé à l'agencement de guidage des moyens de préhension (20) dans l'espace entre les moyens de préhension (30, 40), et
les premières extrémités (301, 61) des chaînes (300, 60) sont reliées entre elles de manière amovible de telle sorte que, lors du déplacement des moyens de préhension dans la direction X vers le côté frontal d'entrée et de sortie (11), une force de poussée est transmise.

13. Procédé pour déplacer des articles d'un préhenseur selon l'une des revendications 6 à 9 sur une surface de stockage (3), dans lequel,
les dispositifs de renvoi (34, 44) opposés à l'agencement de guidage des moyens de préhension (20) ou un dispositif de renvoi correspondant et le dispositif de réception sont déplacés vers les sections d'extrémité (31, 41) des moyens de préhension (30, 40) tournées vers l'agencement de guidage des moyens de préhension (20),
la première chaîne flexible unilatérale (300) est déplacée au moyen de l'entraînement de chaîne associé (55) de telle sorte que la première extrémité libre (301) est déplacée par le premier dispositif de renvoi (34) opposé à l'agencement de guidage des moyens de préhension (20) dans l'espace entre les moyens de préhension (30, 40),
la première extrémité (301) de la première chaîne (300) est reliée de manière amovible au dispositif de réception du deuxième moyen de préhension (40) de telle sorte que des forces de poussée peuvent être transmises lors du déplacement des moyens de préhension dans la direction X vers le côté frontal d'entrée et de sortie (11), et
les moyens de préhension (30, 40) sont déplacés dans la direction X sur le côté frontal d'entrée et de sortie (11), de sorte que l'article est déplacée par la table de support du préhenseur.
